# EUROPÄISCHE PATENTSCHRIFT

(11) **EP 0 770 321 B1**
(45) Veröffentlichungstag und Bekanntmachung des Hinweises auf die Patenterteilung: **31.05.2000**
(21) Anmeldenummer: 96116737.6
(22) Anmeldetag: 18.10.1996
(51) Int. Cl.: A01D 45/00

(54) **Einrichtung zur Feststellung der Position von Spargelpflanzen**
Device for locating the position of asparagus plants
Dispositif pour déterminer la position des plantes d'asperges

(30) Priorität: 23.10.1995 AT 57995 U
(43) Veröffentlichungstag der Anmeldung: 02.05.1997
(73) Patentinhaber: Haindl, Leopold jun., 2282 Markgrafneusiedl 15 (AT)
(72) Erfinder: Haindl, Leopold jun., 2282 Markgrafneusiedl 15 (AT)
(74) Vertreter: Hofinger, Engelbert, Dr.Dr.

(56) Entgegenhaltungen:
- EP-A- 0 053 994
- EP-A- 0 157 678
- DE-A- 3 415 202
- DE-A- 4 319 085
- DE-A- 4 411 080
- US-A- 2 690 043

## Beschreibung

Die Erfindung bezieht sich auf eine Einrichtung zur Feststellung der Position von Spargelpflanzen.

Wenn weißer Spargel das Erdreich durchdringt, muß er rasch geerntet werden, da sich die Pflanze im Licht rasch verfärbt. Manchmal kommt es sogar schon zu einer Verfärbung durch jenen Teil des Sonnenlichtes, der durch Risse im Boden den Spitzenbereich der Pflanze trifft. Durch die Verfärbung erfährt der Spargel eine derartige Wertminderung, daß es häufig vorgezogen wird, den betroffenen Teil der Ernte wegzuwerfen statt ihn auf den Markt zu bringen.

Um dem geschilderten Nachteil abzuhelfen, ist bereits vorgeschlagen worden, die den Spargel enthaltenden Erdwälle mit schwarzen Folien abzudecken. Dies verhindert zuverlässig die Verfärbung des Spargels, doch öffnen sich in der heißen Luft unterhalb der Folie rasch die Spargelspitzen, was das Produkt ebenfalls entwertet.

In EP 0 053 994 B1 ist bereits eine Spargelerntemaschine vorgeschlagen worden, welche die Position erntefähiger Spargelpflanzen feststellt. Dabei wird auf einer Seite des die Pflanzen tragenden Erdreichs eine Kamera angeordnet, welche das Licht einer gegenüberliegenden Lichtquelle nur dort empfängt, wo es nicht vom Boden und den über diesen nach oben vorstehenden Pflanzen absorbiert wird. Da hiebei die Pflanzen erst festgestellt werden, wenn sie bereits den Boden durchstoßen haben, ist diese bekannte Einrichtung zur Lösung des aufgezeigten Problems nicht geeignet.

In grundsätzlicher Abkehr von den bisherigen Vorschlägen sieht die Erfindung vor, daß Sensoren zur Erfassung des Abstandes des noch zur Gänze im Erdreich befindlichen Spargels von der Oberfläche des Erdreiches vorgesehen sind.

Zur Feststellung der Lage der Pflanzen kommen alle aus der Meßtechnik bekannten Sensoren in Frage, welche für den angestrebten Zweck geeignet sind. Sie müssen also zwischen dem Erdreich einerseits und dem darin durch die Pflanze geschaffenen flüssigkeitsgefüllten Hohlraum unterscheiden können, was aufgrund des unterschiedlichen Materials und der unterschiedlichen Temperatur im Bereich der heutigen Meßmöglichkeiten liegt. Vorteilhafterweise wird dabei die Kontur des Erdreichs mit einer gesonderten Einrichtung erfaßt, wobei beispielsweise auf die Lehre der erwähnten EP 0 053 994 zurückgegriffen werden kann, welche sowohl eine optische wie eine akustische Bestimmung der Form des Spargelhügels vorsieht.

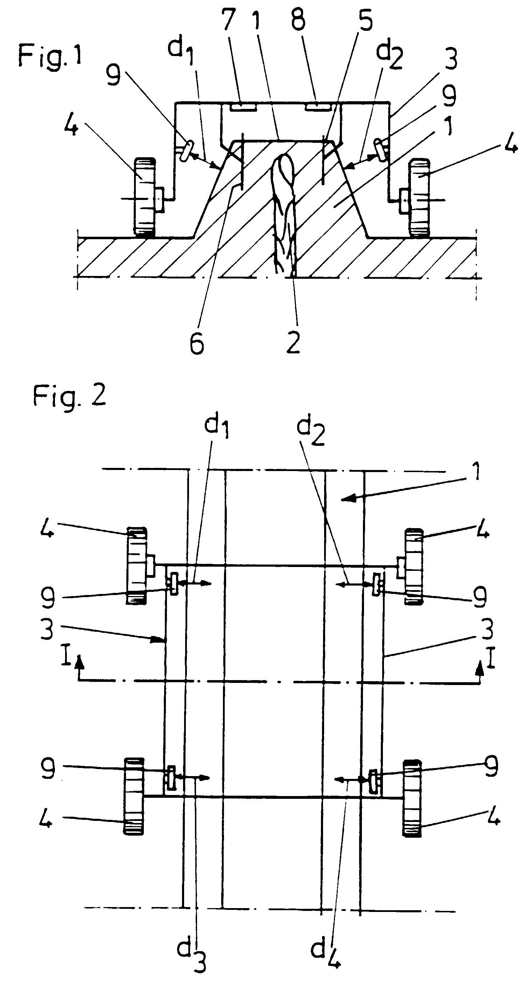

Weitere Einzelheiten der Erfindung werden anhand der Zeichnung näher erläutert, welche eine erfindungsgemäße Einrichtung schematisch in Fig. 1 im Querschnitt und in Fig. 2 in Draufsicht darstellt.

Die erfindungsgemäße Einrichtung ist auf einem Fahrzeug 3 gelagert, dessen Räder 4 so gesteuert werden, daß die Abstände d1 - d4 vom Erdreich 1, welche mit Ultraschall-Sensoren 9 erfaßt werden können, dauernd konstant bleiben. Eine solche Einrichtung ist beispielsweise in EP 0 053 994 beschrieben.

Erfinderisch neu am nunmehr gemachten Vorschlag ist die Anordnung von Sensoren, welche die Relativlage des Erdreichs 1 zu einem darin wachsenden Spargel 2 bereits feststellen können, bevor der Spargel 2 über die Erde vorsteht. Hiezu sind Sensoren 8 vorgesehen, welche entweder die vom Spargel 2 und vom Erdreich 1 kommende Strahlung oder jene Strahlung aufnehmen, welche von einem Sender 7 ausgesandt und durch Erdreich 1 und Spargel 2 reflektiert wird. Ein derartiges nach dem Prinzip der Echosondierung arbeitendes Verfahren ist in Österreichische Ingenieur- und Architekten-Zeitschrift (ÖIAZ), 137. Jg., Heft 4/1992 beschrieben. Die prinzipielle Funktionsfähigkeit des Verfahrens kann bereits mit einer 30 cm über dem Boden geführten Hornantenne im Frequenzbereich 2500 Mhz gezeigt werden.

Auch eine Durchstrahlungsmessung ist möglich. Für diese eignet sich insbesondere Ultraschall, wobei Sender 5 und Empfänger 6 innerhalb des Erdreichs mitgeführt werden können, um störende Reflexionen zu verhindern.

Anstatt beidseits des Erdwalles je einen Sender und Empfänger anzuordnen, können mehrere Sender bzw. Empfänger übereinander an vertikalen Meß- bzw. Sendebalken angeordnet werden, wobei die abgegebenen Strahlen (beispielsweise Radarstrahlen) möglichst gebündelt sein sollen, sodaß die Anlage analog zu einer Serie übereinander angeordneter horizontaler Lichtschranken funktioniert.

Die verwendeten Sensoren 8 können primär auf die Feststellung der Position der Spargelpflanzen abgestimmt werden, da die Bestimmung der Kontur des Erdreichs ohne weiteres optisch, mechanisch oder, wie dargestellt, durch Ultraschall erfolgen kann.

Das dargestellte Gerät kann mit einer Erntemaschine gekoppelt werden, doch ist es auch möglich, die Spargel 2 von Hand ernten zu lassen. Hiezu ist es lediglich notwendig, durch die dargestellte Einrichtung jene Stellen, unter welchen sich eine erntefähige Pflanze befindet, zu markieren. Dies kann durch einen Farbfleck oder etwa durch das Eindrücken eines Markierungsstabes ins Erdreich erfolgen.

## Patentansprüche

1. Einrichtung zur Feststellung der Position von Spargelpflanzen, dadurch gekennzeichnet, daß Sensoren (8) zur Erfassung des Abstandes des noch zur Gänze im Erdreich (1) befindlichen Spargels (2) von der Oberfläche des Erdreiches vorgesehen sind.

2. Einrichtung nach Anspruch 1, dadurch gekennzeichnet, daß Sensoren (8) zur Messung der von den Pflanzen abgegebenen IR-Strahlung vorgesehen sind.

3. Einrichtung nach Anspruch 1, dadurch gekennzeichnet, daß Sensoren zur Erfassung von der Einrichtung ausgesandten und von den Spargeln (2) reflektierten elektromagnetischen Wellen vorgesehen sind.

4. Einrichtung nach Anspruch 1, dadurch gekennzeichnet, daß seitlich des den Spargel (2) enthaltenden Erdreichs (1) mindestens ein Sender (5) insbesondere für Ultraschall vorgesehen ist, und ein als Empfänger (6) ausgebildeter Sensor die Lage des Spargels (2) und gegebenenfalls auch die Oberfläche des Erdreichs (1) feststellt.

5. Einrichtung nach Anspruch 4, dadurch gekennzeichnet, daß Sender (5) und/oder Empfänger (6) innerhalb des Erdreichs (1) geführt werden.

6. Einrichtung nach einem der vorhergehenden Ansprüche, dadurch gekennzeichnet, daß die Kontur des Erdreichs (1) mit einer gesonderten, insbesondere optischen Einrichtung festgestellt wird.

7. Einrichtung nach einem der Ansprüche 1 bis 6, dadurch gekennzeichnet, daß die festgestellte Position einer erntefähigen Spargelpflanze durch eine Markiereinrichtung angezeigt wird.

## Claims

1. Apparatus for establishing the position of asparagus plants, characterised in that there are provided sensors (8) for detecting the spacing of the asparagus (2) which is still entirely in the earth (1) from the surface of the earth.

2. Apparatus according to claim 1 characterised in that there are provided sensors (8) for measuring the IR radiation produced by the plants.

3. Apparatus according to claim 1 characterised in that there are provided sensors for detecting electromagnetic waves which are emitted by the apparatus and reflected by the asparaguses (2).

4. Apparatus according to claim 1 characterised in that provided laterally of the earth (1) containing the asparagus (2) is at least one transmitter (5), in particular for ultrasound, and a sensor in the form of a receiver (6) establishes the position of the asparagus (2) and possibly also establishes the surface of the earth (1).

5. Apparatus according to claim 4 characterised in that transmitter (5) and/or receiver (6) are guided within the earth (1).

6. Apparatus according to one of the preceding claims characterised in that the contour of the earth (1) is established with a separate, in particular optical apparatus.

7. Apparatus according to one of claims 1 to 6 characterised in that the established position of a harvestable asparagus plant is indicated by a marking device.

## Revendications

1. Dispositif pour déterminer la position d'asperges, caractérisé en ce qu'il est prévu des capteurs (8) pour détecter la distance entre l'asperge (2) qui se trouve encore complètement dans la terre (1), et la surface de la terre.

2. Dispositif selon la revendication 1, caractérisé en ce qu'il est prévu des capteurs (8) pour mesurer le rayonnement infrarouge émis par les plantes.

3. Dispositif selon la revendication 1, caractérisé en ce qu'il est prévu des capteurs pour détecter des ondes électromagnétiques émises par le dispositif et réfléchies par les asperges (2).

4. Dispositif selon la revendication 1, caractérisé en ce qu'il est prévu, sur le côté de la terre (1) qui contient l'asperge (2), au moins un émetteur (5) en particulier pour les ultrasons, et un capteur conçu comme un récepteur (6) détermine la position de l'asperge (2) et éventuellement, aussi, la surface de la terre (1).

5. Dispositif selon la revendication 4, caractérisé en ce que l'émetteur (5) et/ou le récepteur (6) sont prévus dans la terre (1).

6. Dispositif selon l'une des revendications précédentes, caractérisé en ce que le contour de la terre (1) est déterminé à l'aide d'un dispositif séparé, notamment optique.

7. Dispositif selon l'une des revendications 1 à 6, caractérisé en ce que la position déterminée d'une asperge prête à être récoltée est indiquée à l'aide d'un dispositif de marquage.
